(19) Europäisches Patentamt
European Patent Office
Office européen des brevets

(11) EP 4 579 850 A1

(12) EUROPEAN PATENT APPLICATION
published in accordance with Art. 153(4) EPC

(43) Date of publication:
**02.07.2025 Bulletin 2025/27**

(21) Application number: **22969905.3**

(22) Date of filing: **31.12.2022**

(51) International Patent Classification (IPC):
***H01M 10/0567** (2010.01)*

(52) Cooperative Patent Classification (CPC):
**H01M 10/0567;** Y02E 60/10

(86) International application number:
**PCT/CN2022/144390**

(87) International publication number:
**WO 2024/138765 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventors:
- **ZHENG, Yezhen**
  **Ningde City, Fujian 352100 (CN)**
- **ZHOU, Shaoyun**
  **Ningde City, Fujian 352100 (CN)**

(74) Representative: **Icosa**
**83 avenue Denfert-Rochereau**
**75014 Paris (FR)**

# (54) ELECTROCHEMICAL APPARATUS AND ELECTRONIC APPARATUS COMPRISING SAME

(57) Disclosed are an electrochemical device and an electronic device containing the same. The electrochemical device includes: a positive electrode, a negative electrode, an electrolyte, and a separator, where the positive electrode includes a positive current collector and a first positive active material layer and a second positive active material layer located on the positive current collector, the first positive active material layer is located between the positive current collector and the second positive active material layer, the first positive active material layer contains an element Mn and has a thickness of h1 μm, the second positive active material layer has a thickness of h2 μm, and h1 > h2. The electrochemical device in this application has improved cycle performance, improved storage performance, and improved overcharge test performance as well as reduced impedance.

EP 4 579 850 A1

## Description

### TECHNICAL FIELD

This application relates to the field of energy storage, and in particular, to an electrochemical device and an electronic device having the same, particularly a lithium-ion battery.

### BACKGROUND

Lithium-ion secondary batteries have been widely used in fields such as new energy electric vehicles and electronic products, for example, cameras, digital cameras, and 3C products due to characteristics such as high energy density, high operating voltage, long cycle life, no memory effect, and green environmental protection. With the rapid development of technologies, diversity of market demands, and rise of energy storage systems and electric vehicle industries in the next few years, people have more requirements for the lithium-ion batteries, such as higher energy density, higher safety, and lower costs.

The lithium-ion battery generally includes a positive electrode, a negative electrode, a separator, and an electrolyte. In order to further improve various performance of the lithium-ion battery and consider safety performance and costs, in addition to seeking new positive and negative electrode materials, developing new electrolyte formulas is also an important solution. As a key component of the lithium-ion battery, the electrolyte plays a role in transporting lithium ions between the positive and negative electrodes, and has an important impact on a cycle life, a capacity, interface performance, the safety performance of the battery, and the like. Therefore, this application proposes a solution that can improve high-temperature storage and cycle performance of the battery without affecting impedance, thus achieving the purpose of improving performance while considering safety and reducing costs.

### SUMMARY

Embodiments of this application provide an electrochemical device in an attempt to resolve, at least to some extent, at least one problem existing in the related fields. Embodiments of this application further provide an electronic device including the electrochemical device.

In an embodiment, this application provides an electrochemical device. The electrochemical device includes a positive electrode, a negative electrode, an electrolyte, and a separator, where the positive electrode includes a positive current collector and a first positive active material layer and a second positive active material layer that are located on the positive current collector, the first positive active material layer is located between the positive current collector and the second positive active material layer, the first positive active material layer contains an element Mn and has a thickness of h1 μm, the second positive active material layer has a thickness of h2 μm, and h1 > h2. The applicant of this application finds that when the positive electrode has two layers of active materials coated in sequence and h1 > h2 is satisfied, a lithium-ion battery exhibits good room temperature cycle performance and high temperature storage performance.

In some embodiments, the electrolyte includes a fluorine-containing lithium salt, a content of the fluorine-containing lithium salt is a% based on total mass of the electrolyte, and a ratio h1/h2 of the thickness h1 of the first positive active material layer to the thickness h2 of the second positive active material layer is k, where

$$5 \leq a \leq 12.5;$$

and

$$0.9 \leq k/a \leq 10.$$

The applicant of this application finds that the cycle and high-temperature storage performance of the lithium-ion battery can be effectively improved by adjusting a content of $LiPF_6$ in the electrolyte. It is a surprise for the applicant to find through experiments that, when it is determined that the ratio of ratio k of h1 to h2 to a lithium salt concentration is kept within certain ranges, the lithium-ion secondary battery can have excellent performance. This may be because $LiPF_6$ has poor thermal stability in the electrolyte, and is prone to decompose at a high temperature, which causes acidity of the electrolyte to rise. Reducing the lithium salt concentration can reduce rise in the acidity of the electrolyte, thereby alleviating damage caused by transition metal dissolution. However, when the lithium salt concentration is low, concentration polarization is large, which affects transmission of lithium ions. Therefore, when k/a is too large, interface protection of the second active

material layer is insufficient or the acidity generated by the electrolyte is high, and the high-temperature storage performance is affected; and when k/a is too small, compaction of the first active material layer is uneven or the lithium salt concentration is too low, which affects a cycle at 25 °C. In particular, when $5 \leq a \leq 12.5$ and $0.9 \leq k/a \leq 10$ are satisfied, the cycle performance and the storage performance of the lithium-ion battery are both significantly improved.

In some embodiments,

$$6 \leq a \leq 10.$$

In some embodiments,

$$1 \leq k/a \leq 4.$$

In some embodiments, the electrolyte includes a low viscosity chain ester, and the low viscosity chain ester is selected from at least one of dimethyl carbonate, ethyl methyl carbonate, ethyl acetate, ethyl propionate, propyl propionate, methyl formate, ethyl formate, or methyl butyrate; and

a content of the low viscosity chain ester is b% based on total mass of the electrolyte, and a ratio h1/h2 of the thickness h1 of the first positive active material layer to the thickness h2 of the second positive active material layer is k, where

$$20 \leq b \leq 63;$$

and

$$kb \geq 40, \text{ and preferably } 8 \leq k \leq 20.$$

The applicant of this application finds that when a value of k is within an appropriate range, adjusting a content of a low-viscosity chain ester solvent in the electrolyte can effectively improve a DCR of the lithium-ion battery, which is mainly because the low-viscosity chain ester solvent generally has low viscosity and good fluidity, and can increase a migration rate of lithium ions. When a value of k is too small, uneven compaction density causes uneven current density distribution, which affects dynamics and a service life of the lithium-ion battery. When the mass percentage of the low viscosity chain ester in the electrolyte is b% and $kb \geq 40$ and $20 \leq b \leq 63$ are satisfied, the DCR of the lithium-ion battery is significantly reduced.

In some embodiments, the first positive active material layer includes a first positive active material, and the first positive active material includes at least one of lithium manganate, lithium nickel manganate, lithium nickel-cobalt manganese oxide, lithium manganese iron phosphate, lithium manganese phosphate, or lithium-rich manganese based materials; and

the second positive active material layer includes a second positive active material, and the second positive active material includes at least one of lithium cobalt oxide, lithium iron phosphate, lithium manganese iron phosphate, lithium manganese phosphate, sodium iron phosphate, lithium vanadium phosphate, sodium vanadium phosphate, lithium vanadyl phosphate, sodium vanadyl phosphate, lithium vanadate, lithium manganate, lithium nickelate, lithium nickel cobalt manganese oxide, lithium-rich manganese based materials, lithium nickel-cobalt aluminate, or lithium titanate.

In some embodiments, the first positive active material layer includes a first positive active material, and the first positive active material includes lithium manganate; and the second positive active material layer includes a second positive active material, and the second positive active material includes at least one of lithium iron phosphate, lithium nickel manganese cobalt oxide, or lithium vanadate.

In some embodiments, h1 is 30 to 120, h2 is 0.1 to 50, h1/h2 is k, and $8 \leq k \leq 20$. In some embodiments, $8 \leq k \leq 15$.

The applicant of this application finds that when $h1/h2 < 8$, the second active material layer is too thick, resulting in uneven compaction of the first active material layer, and affecting electrochemical performance of the lithium-ion battery.

In some embodiments, the fluorine-containing lithium salt is selected from at least one of lithium hexafluorophosphate, lithium bis(trifluoromethanesulphonyl)imide, lithium bis(fluorosulfonyl)imide, lithium tetrafluoroborate, lithium difluoro(oxalato)borate, or lithium trifluoromethanesulfonate.

In some embodiments, the fluorine-containing lithium salt is lithium hexafluorophosphate and lithium bis(trifluoromethanesulfonyl)imide. In some embodiments, the fluorine-containing lithium salt includes lithium bis(fluorosulfonyl)imide. In some embodiments, the fluorine-containing lithium salt is lithium hexafluorophosphate, and at least one of lithium tetrafluoroborate and lithium difluoro(oxalato)borate.

In some embodiments, the first positive active material layer includes a first positive active material, and a specific surface area of the first positive active material is d $m^2/g$, where $0.2 \leq d \leq 1$, and preferably $0.3 \leq d \leq 1$; and $1 \leq a \times d \leq 10$. The applicant of this application finds that when a content of a lithium salt in the electrolyte is low, further adjusting the specific surface area BET of the positive active material can further improve the cycle performance of the battery. When $0.2 \leq d \leq 1$ and $1 \leq a \times d \leq 10$ are satisfied, the cycle performance of the lithium-ion battery is significantly improved.

In some embodiments, the separator includes a coating, the coating includes a carbonyl-containing polymer, the carbonyl-containing polymer has a peak at 1800 $cm^{-1}$ to 1700 $cm^{-1}$ in an infrared spectrum, a thickness of the separator is e $\mu m$, and $1 \leq b/e \leq 9$.

In some embodiments, the electrolyte further includes a fluorocarbonate compound, a content of the fluorocarbonate compound is f% based on total mass of the electrolyte, and $f \leq 10$. The applicant of this application finds that adding an FEC additive to the electrolyte can further improve the cycle performance of the battery. This is mainly because the FEC additive can further improve an SEI of the negative electrode, a formed SEI film has a denser structure without increased impedance, and the SEI film with better performance can prevent further decomposition of the electrolyte. When $f \leq 10$ is satisfied, the electrolyte has a better improvement effect.

In some embodiments, the electrolyte includes a compound containing a sulfur-oxygen double bond, a content of the compound containing the sulfur-oxygen double bond is g% based on total mass of the electrolyte, $g \leq 5$, and the compound containing the sulfur-oxygen double bond includes a compound of Formula VI:

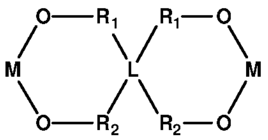

Formula VI;

where L is selected from

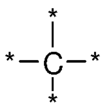,
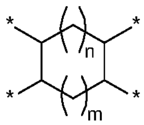,
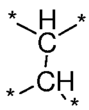, or
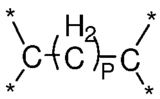;

$R_1$ and $R_2$ each are independently selected from a single bond or a methylene group; m and n each are independently an integer from 0 to 2; p is an integer from 0 to 6; and each M is independently selected from

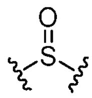 or 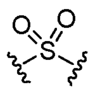.

The applicant of this application finds that adding the bicyclic compound containing the sulfur-oxygen double bond to the electrolyte can significantly improve the high-temperature storage performance of the battery. This is mainly because the bicyclic compound containing the sulfur-oxygen double bond can form an SEI film on an electrode surface. The formed SEI film has a denser structure without increased impedance. The film can not only effectively inhibit transition metal dissolution, but also provide good protection for an electrode interface. When the content of the bicyclic compound containing the sulfur-oxygen double bond satisfies $g \leq 5$, the cycle performance and an overcharge performance test of the lithium-ion battery are significantly improved.

In some embodiments, the compound containing the sulfur-oxygen double bond is selected from at least one of 2,4,8,10-tetraoxa-3,9-dithiaspiro[5.5]undecane,3,3,9,9-tetraoxide or

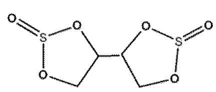.

In some embodiments, the electrolyte includes a phosphate compound, where the phosphate compound is selected from at least one of trimethyl phosphate or triphenyl phosphate; and a content of the phosphate compound is i%

based on total mass of the electrolyte, where $0.09 \leq i \leq 3$. The applicant of this application finds that by adding the phosphate compound to the electrolyte, overcharge performance of the lithium-ion battery is better. The phosphate compound is used as an additive. This is mainly because the phosphate compound can have a polymerization reaction, and a generated polymer film can block battery overcharge, prevent thermal runaway, and keep the battery in a safe state.

In some embodiments, a liquid retention coefficient of the electrochemical device is z g/Ah, where $2 \leq z \leq 5$ is satisfied. The applicant of this application finds that a thickness of a coating of the separator also affects battery performance. When the content of the lithium salt is low and a coating weight of a positive electrode film layer is large, an electrode plate is poorly infiltrated, and dynamics is worse. Increasing the thickness of the coating of the separator can improve a liquid retention capacity and an electrolyte supply capacity of the battery. However, if the separator is too thick, transmission of lithium ions is slowed down and cycle performance is affected. In addition, when the content of the lithium salt is low and the coating weight of the positive electrode film layer is large, if an electrolyte liquid retention amount is too small, some active materials are not infiltrated, and a capacity of the battery cannot be fully used. However, too much liquid injection amount also causes problems such as a decrease in an energy density of the lithium-ion battery and an increase in cost. Therefore, reasonable control of a volume liquid retention coefficient is required to enable the battery to exert optimal performance. When $1 \leq b/e \leq 9$ and $2 \leq z \leq 5$ are satisfied, the cycle performance of the lithium-ion battery is significantly improved and a DCR is significantly reduced.

In another embodiment, this application provides an electronic device. The electronic device includes the electrochemical device according to the embodiments of this application.

The electrochemical device provided in this application has improved cycle performance, improved storage performance, and improved overcharge test performance as well as reduced impedance.

The additional aspects and advantages of the embodiments of this application may be partially described and shown in the subsequent description or illustrated by the implementation of the embodiments of this application.

## DETAILED DESCRIPTION OF EMBODIMENTS

Embodiments of this application will be described in detail below. No embodiment of this application is to be construed as a limitation on this application.

In addition, quantities, ratios, and other values are sometimes presented herein in a range format. It should be understood that such range formats are used for convenience and brevity, and it should be flexibly understood that such range formats not only include values explicitly designated as limitations of a range, but also include all individual values or subranges in the range as if each value and subrange were explicitly designated.

In specific implementations and claims, a list of items listed by the terms "one of", "one piece of", "one type of", or other similar terms may imply any one of the items listed. For example, if items A and B are listed, the phrase "one of A and B" implies A only or B only. In another example, if items A, B, and C are listed, the phrase "one of A, B, and C" means only A; only B; or only C. Item A may include a single component or a plurality of components. Item B may include a single component or a plurality of components. Item C may include a single component or a plurality of components.

In specific implementations and claims, a list of items linked by the terms such as "at least one of", "at least one thereof", "at least one type of", or other similar terms may mean any combination of the listed items. For example, if items A and B are listed, the phrase "at least one of A and B" means: A alone; B alone; or both A and B. In another example, if items A, B, and C are listed, the phrase "at least one of A, B, and C" means: A alone; B alone; C alone; A and B (excluding C); A and C (excluding B); B and C (excluding A); or all of A, B, and C. Item A may include a single component or a plurality of components. Item B may include a single component or a plurality of components. Item C may include a single component or a plurality of components.

## Electrochemical device

In some embodiments, this application provides an electrochemical device. The electrochemical device includes a positive electrode, a negative electrode, an electrolyte, and a separator.

In some embodiments, the positive electrode includes a positive current collector and a first positive active material layer and a second positive active material layer located on the positive current collector, the first positive active material layer is located between the positive current collector and the second positive active material layer, the first positive active material layer contains an Mn element and has a thickness of h1 μm, the second positive active material layer has a thickness of h2 μm, and h1 > h2.

In some embodiments, the electrolyte includes a fluorine-containing lithium salt, a content of the fluorine-containing lithium salt is a% based on total mass of the electrolyte, and a ratio h1/h2 of the thickness h1 of the first positive active material layer to the thickness h2 of the second positive active material layer is k, where

$$5 \leq a \leq 12.5;$$

and

$$0.9 \leq k/a \leq 10.$$

In some embodiments, a is 4, 5, 6, 7, 7.5, 8, 9, 10, 11, 12, 12.5, or a value falling within a range formed by any two of these values.

In some embodiments, k/a is 0.9, 1, 1.5, 2, 2.5, 3, 4, 5, 6, 7, 8, 9, 10, or a value falling within a range formed by any two of these values.

In some embodiments, the electrolyte includes a low viscosity chain ester, where the low viscosity chain ester is selected from at least one of dimethyl carbonate, ethyl methyl carbonate, ethyl acetate, ethyl propionate, propyl propionate, methyl formate, ethyl formate, or methyl butyrate.

In some embodiments, a content of the low viscosity chain ester is b% based on total mass of the electrolyte, and the ratio h1/h2 of the thickness h1 of the first positive active material layer to the thickness h2 of the second positive active material layer is k, where

$$20 \leq b \leq 63;$$

and

$$kb \geq 40.$$

In some embodiments, b is 20, 24, 28, 32, 34, 38, 42, 46, 50, 54, 56, 60, 63, or a value falling within a range formed by any two of these values.

In some embodiments, kb is 40, 80, 120, 160, 200, 240, 280, 320, 360, 400, 440, 480, 520, 560, 600, or a value falling within a range formed by any two of these values.

In some embodiments, the first positive active material layer includes a first positive active material, and the first positive active material includes at least one of lithium manganate ($Li_{1+z}Mn_{2-n}A_nO_4$), lithium nickel manganate ($Li_{1+z}Ni_xMn_{1-x-n}A_nO_4$), lithium nickel-cobalt manganate oxide ($Li_{1+z}Ni_xCo_yM_{1-x-y-n}A_nO_2$), lithium manganese iron phosphate ($Li_{1+z}Mn_xFe_{1-x-n}A_nPO_4$), lithium manganese phosphate ($Li_{1+z}Mn_{1-n}A_nPO_4$), or lithium-rich manganese based materials ($mLi_2MnO_3 \cdot (1-m)Li_{1+z}Ni_xCo_yMn_{1-x-y-n}A_nO_2$), where $0 \leq z < 0.1$, $0 \leq n < 0.1$, $0 < x < 1$, $0 < y < 1$, $0 < x + y + n < 1$, $0 < m < 1$, and A is at least one element of Ti, Mg, Al, Zr, Nb, Ba, La, V, W, Ag, and Sn.

In some embodiments, the first positive active material includes at least one of $LiNi_{0.85}Co_{0.05}Mn_{0.1}O_2$, $LiNi_{0.5}Co_{0.2}Mn_{0.3}O_2$, $LiMn_2O_4$, and $LiMn_{0.75}Fe_{0.25}PO_4$. In some embodiments, the first positive active material includes $LiNi_{0.5}Co_{0.2}Mn_{0.3}O_2$ and $LiMn_2O_4$.

In some embodiments, the second positive active material layer includes a second positive active material, and the second positive active material includes at least one of lithium cobalt oxide ($Li_{1+z}Co_{1-n}A_nO_2$), lithium iron phosphate ($Li_{1+z}Fe_{1-n}A_nPO_4$), lithium manganese iron phosphate ($Li_{1+z}Mn_xFe_{1-x-n}A_nPO_4$), lithium manganese phosphate ($Li_{1+z}Mn_{1-n}A_nPO_4$), sodium iron phosphate ($Na_{1+z}Fe_{1-n}A_nPO_4$), lithium vanadium phosphate ($Li_{3+z}V_{2-n}A_n(PO_4)_3$), sodium vanadium phosphate ($Na_{3+z}V_{2-n}A_n(PO_4)_3$), lithium vanadate ($Li_{1+z}O_3V_{1-n}A_n$), lithium manganate ($Li_{1+z}Mn_{2-n}A_nO_4$), lithium nickelate ($Li_{1+z}Ni_{1-n}A_nO_2$), lithium nickel-cobalt manganate oxide ($Li_{1+z}Ni_xCo_yM_{1-x-y-n}A_nO_2$), lithium-rich manganese based materials ($mLi_2MnO_3 \cdot (1-m)Li_{1+z}Ni_xCo_yMn_{1-x-y-n}A_nO_2$), lithium nickel-cobalt aluminate ($Li_{1+z}Ni_xCo_yM_{1-x-y-n}A_nO_2$), or lithium titanate ($Li_{4+z}Ti_{5-n}O_{12}$), where $0 \leq z < 0.1$, $0 \leq n < 0.1$, $0 < x < 1$, $0 < y < 1$, $0 < x + y + n < 1$, $0 < m < 1$, M is Mn or Al, and A is at least one element of Ti, Mg, Al, Zr, Nb, Ba, La, V, W, Ag, and Sn.

In some embodiments, the second positive active material includes at least one of $LiFePO_4$, $LiNi_{0.5}Co_{0.2}Mn_{0.3}O_2$, $LiVO_3$, and $LiNi_{0.5}Mn_{1.5}O_4$.

In some embodiments, the first positive active material layer includes a first positive active material, and the first positive active material includes lithium manganate.

In some embodiments, the second positive active material layer includes a second positive active material, and the second positive active material includes at least one of lithium iron phosphate, lithium nickel manganese cobalt oxide, or lithium vanadate.

In some embodiments, h1 is 30 to 120. In some embodiments, h1 is 30, 40, 50, 60, 70, 80, 90, 100, 110, 120, or a value falling within a range formed by any two of these values.

In some embodiments, h2 is 0.1 to 50. In some embodiments, h2 is 0.1, 1, 4, 6, 8, 10, 12, 16, 18, 20, 30, 40, 50, or a value falling within a range formed by any two of these values.

In some embodiments, $8 \leq k \leq 20$. In some embodiments, k is 8, 10, 12, 14, 15, 16, 18, 20, or a value falling within a range formed by any two of these values.

In some embodiments, the fluorine-containing lithium salt is selected from at least one of lithium hexafluorophosphate, lithium bis(trifluoromethanesulphonyl)imide, lithium bis(fluorosulfonyl)imide, lithium tetrafluoroborate, lithium difluoro(oxalato)borate, or lithium trifluoromethanesulfonate.

In some embodiments, the first positive active material layer includes a first positive active material, and a specific surface area of the first positive active material is d $m^2/g$, where $1 \leq a \times d \leq 10$.

In some embodiments, $a \times d$ is 1, 2, 3, 4, 5, 6, 7, 8, 9, 10, or a value falling within a range formed by any two of these values.

In some embodiments, d is 0.2, 0.3, 0.4, 0.5, 0.6, 0.7, 0.8, 1, or a value falling within a range formed by any two of these values.

In some embodiments, the separator includes a coating, the coating includes a carbonyl-containing polymer, the carbonyl-containing polymer has a peak at 1800 $cm^{-1}$ to 1700 $cm^{-1}$ in an infrared spectrum, a thickness of the separator is e $\mu m$, and $1 \leq b/e \leq 9$.

In some embodiments, b/e is 1, 2, 3, 4, 5, 6, 7, 8, 9, or a value falling within a range formed by any two of these values.

In some embodiments, e is 5, 7, 9, 11, 13, 15, 17, 19, 21, 22, or a value falling within a range formed by any two of these values.

In some embodiments, the carbonyl-containing polymer is selected from polymers of a repeating unit represented by the following Formula (I):

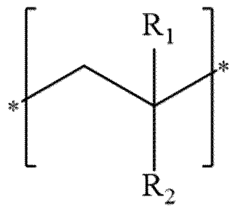

(I),

where $R_1$ is selected from hydrogen, a cyano group, $C_{1-6}$ alkyl, $C_{2-6}$ alkenyl, or a halogen atom; and the $C_{1-6}$ alkyl and the $C_{2-6}$ alkenyl are optionally substituted by one or more halogen atoms or cyano groups; and

$R_2$ is selected from -(C=O)-$R_3$ or -(C=O)-NH-$R_3$; $R_3$ is selected from $C_{1-6}$ alkyl or $C_{2-6}$ alkenyl, and the $C_{1-6}$ alkyl and the $C_{2-6}$ alkenyl are optionally substituted by one or more halogen atoms or cyano groups.

In some embodiments, the electrolyte further includes a fluorocarbonate compound, a content of the fluorocarbonate compound is f% based on total mass of the electrolyte, and $f \leq 10$.

In some embodiments, f is 0.005, 0.01, 0.5, 1, 2, 3, 4, 5, 6, 7, 8, 9, 10, or a value falling within a range formed by any two of these values.

In some embodiments, the electrolyte includes a compound containing a sulfur-oxygen double bond, a content of the compound containing the sulfur-oxygen double bond is g% based on total mass of the electrolyte, and $g \leq 5$. In some embodiments, g is 1, 2, 3, 4, 5, or a value falling within a range formed by any two of these values.

In some embodiments, the compound containing the sulfur-oxygen double bond includes a compound of Formula VI:

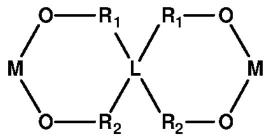

Formula VI;

where L is selected from

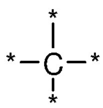 , 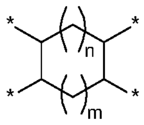 , 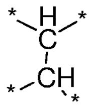 , or 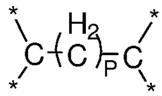 ;

$R_1$ and $R_2$ each are independently selected from a single bond or a methylene group; m and n each are independently an integer from 0 to 2; p is an integer from 0 to 6; and each M is independently selected from

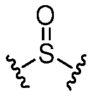 or 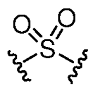 .

In some embodiments, the compound containing the sulfur-oxygen double bond is selected from at least one of 2,4,8,10-tetraoxa-3,9-dithiaspiro[5.5]undecane,3,3,9,9-tetraoxide or

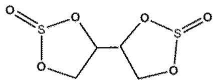 .

In some embodiments, the electrolyte includes a phosphate compound, where the phosphate compound is selected from at least one of trimethyl phosphate or triphenyl phosphate.

In some embodiments, a content of the phosphate compound is i% based on total mass of the electrolyte, where $0.09 \leq i \leq 3$. In some embodiments, i is 0.09, 0.1, 0.5, 1, 1.4, 1.8, 2, 2.4, 2.8, 3, or a value falling within a range formed by any two of these values.

In some embodiments, a liquid retention coefficient of the electrochemical device is z g/Ah, where $2 \leq z \leq 5$. In some embodiments, z is 2, 3, 4, 5, or a value falling within a range formed by any two of these values.

In some embodiments, the positive active material layer further includes a conductive agent. In some embodiments, the conductive agent includes at least one of a carbon nanotube, a carbon fiber, acetylene black, graphene, Ketjen black, or carbon black.

In some embodiments, the positive active material layer further includes a binder. In some embodiments, the binder includes at least one of polyvinylidene fluoride, carboxymethyl cellulose, styrene-butadiene rubber, polyvinyl alcohol, hydroxypropyl cellulose, diacetyl cellulose, poly(vinyl chloride), carboxylated poly(vinyl chloride), poly(vinyl fluoride), a polymer including ethylidene oxygen, polyvinyl pyrrolidone, polyurethane, poly(tetrafluoroethylene), polyvinylidene difluoride, polyethylene, polypropylene, acrylated styrene-butadiene rubber, epoxy resin, or nylon.

In some embodiments, the current collector includes at least one of copper foil or aluminum foil.

In some embodiments, the positive electrode can be prepared according to preparation methods well known in the art. For example, the positive electrode can be obtained according to the following method: mixing the positive electrode active material, the conductive agent, and the binder in a solvent to prepare an active material composite, and coating the current collector with the active material composite. In some embodiments, the solvent may include N-methylpyrrolidone and the like, but is not limited thereto.

In some embodiments, the electrochemical device includes any device in which an electrochemical reaction occurs.

In some embodiments, the electrochemical device further includes the separator located between the positive electrode and the negative electrode.

In some embodiments, the electrochemical device is a lithium secondary battery.

In some embodiments, the lithium secondary battery includes, but is not limited to: a lithium metal secondary battery, a lithium ion secondary battery, a lithium polymer secondary battery or lithium ion polymer secondary battery, and an all-solid-state lithium secondary battery.

## Negative electrode

In some embodiments, a material, composition, and a manufacturing method of a negative electrode used in the electrochemical device of this application may include any technology disclosed in the prior art. In some embodiments, the negative electrode is the negative electrode described in US patent application US9812739B, which is incorporated by reference in its entirety into this application.

In some embodiments, the negative electrode includes a current collector and a negative active material layer located on the current collector. In some embodiments, the negative active material layer includes a negative active material. In some embodiments, the negative active material includes, but is not limited to: lithium metal, structured lithium metal, natural graphite, artificial graphite, a mesocarbon microbead (MCMB), hard carbon, soft carbon, silicon, a silicon-carbon composite, silicon-oxygen materials (such as SiO or $SiO_2$), Li-Sn alloy, Li-Sn-O alloy, Sn, SnO, $SnO_2$, spinel-structured lithiated $TiO_2$-$Li_4Ti_5O_{12}$, Li-Al alloy, or any combination thereof.

In some embodiments, the negative active material layer includes a binder. In some embodiments, the binder includes, but is not limited to, polyvinyl alcohol, carboxymethyl cellulose, hydroxypropyl cellulose, diacetyl cellulose, poly(vinyl chloride), carboxylated poly(vinyl chloride), poly(vinyl fluoride), a polymer including ethylidene oxygen, polyvinyl pyrrolidone, polyurethane, poly(tetrafluoroethylene), polyvinylidene difluoride, polyethylene, polypropylene, styrene-butadiene rubber, acrylic acid styrene-butadiene rubber, epoxy resin, or nylon.

In some embodiments, the negative active material layer includes a conductive material. In some embodiments, the conductive material includes, but is not limited to: natural graphite, artificial graphite, carbon black, acetylene black, Ketjen black, a carbon fiber, metal powder, a metal fiber, copper, nickel, aluminum, silver, or a polyphenylene derivative.

In some embodiments, the current collector includes, but is not limited to: copper foil, nickel foil, stainless steel foil, titanium foil, nickel foam, copper foam, or a polymer substrate covered with conductive metal.

In some embodiments, the negative electrode can be obtained according to the following method: mixing the active material, the conductive material, and the binder in a solvent to prepare an active material composite, and coating the current collector with the active material composite.

In some embodiments, the solvent may include, but is not limited to: deionized water and N-methyl-pyrrolidone.

In some embodiments, a negative electrode in an all-solid-state lithium secondary battery is lithium metal foil.

## Separator

In some embodiments, a material and shape of a separator used in the electrochemical device of this application are not particularly limited, and may be of any technology disclosed in the prior art. In some embodiments, the separator includes a polymer or an inorganic material formed by a material that is stable to the electrolyte of this application.

For example, the separator may include a substrate layer and a surface treatment layer. The substrate layer is a non-woven fabric, a film or a composite film with a porous structure, and a material of the substrate layer is selected from at least one of polyethylene, polypropylene, polyethylene terephthalate and polyimide. Specifically, a polypropylene porous film, a polyethylene porous film, a polypropylene non-woven fabric, a polyethylene non-woven fabric or a polypropylene-polyethylene-polypropylene porous composite film may be used.

The surface treatment layer is disposed on at least one surface of the substrate layer. The surface treatment layer may be a polymer layer or an inorganic compound layer, or a layer formed by mixing a polymer and an inorganic compound.

The inorganic compound layer includes an inorganic particle and a binder, and the inorganic particle is selected from one or a combination of more of: alumina, silicon oxide, magnesium oxide, titanium oxide, hafnium dioxide, tin oxide, cerium dioxide, nickel oxide, zinc oxide, calcium oxide, zirconia, yttrium oxide, silicon carbide, boehmite, aluminum hydroxide, magnesium hydroxide, calcium hydroxide, and barium sulfate. The binder is selected from one or a combination of more of: polyvinylidene fluoride, a vinylidene fluoride-hexafluoropropylene copolymer, polyamide, polyacrylonitrile, polyacrylate, polyacrylic acid, polyacrylate salt, polyvinylpyrrolidone, polyvinylether, polymethyl methacrylate, polytetrafluoroethylene, and polyhexafluoropropylene. The polymer layer includes a polymer, and a material of the polymer includes at least one of polyamide, polyacrylonitrile, an acrylate polymer, polyacrylic acid, polyacrylate, polyvinylpyrrolidone, polyvinylether, polyvinylidene fluoride, or poly(vinylidene fluoride-hexafluoropropylene).

## Electrolyte

In some embodiments, an electrolyte used in the electrolyte in embodiments of this application can be an electrolyte known in the prior art. The electrolyte includes, but is not limited to: an inorganic lithium salt, such as $LiClO_4$, $LiPF_6$, $LiBF_4$, $LiSbF_6$, $LiSO_3F$, or $LiN(FSO_2)_2$; a fluorine-containing organic lithium salt, such as $LiCF_3SO_3$, $LiN(FSO_2)(CF_3SO_2)$, $LiN(CF_3SO_2)_2$, $LiN(C_2F_5SO_2)_2$, lithium 1, 1,2,2,3,3-hexafluoropropane-disulfonimide, lithium 1,1,2,2-tetrafluoroethane-disulfonimide, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(CF_3SO_2)_2$, or $LiBF_2(C_2F_5SO_2)_2$; a lithium salt containing a dicarboxylic

acid coordination compound, such as lithium bis(oxalato)borate, lithium oxalyldifluoroborate, lithium tris(oxalato)phosphate, lithium difluorobis(oxalato)phosphate, or lithium tetrafluoro(oxalato)phosphate; and the like. In addition, one type of the above-mentioned electrolytes may be used alone, or two or more types may be used together. For example, in some embodiments, the electrolyte includes a combination of $LiPF_6$ and $LiBF_4$. In some embodiments, the electrolyte includes a combination of the inorganic lithium salt such as $LiPF_6$ or $LiBF_4$ and the fluorine-containing organic lithium salt such as $LiCF_3SO_3$ $LiN(CF_3SO_2)_2$, or $LiN(C_2F_5SO_2)_2$. In some embodiments, a concentration of the electrolyte is in a range from 0.8 to 3 mol/L, for example, in a range from 0.8 to 2.5 mol/L, in a range from 0.8 to 2 mol/L, in a range from 1 to 2 mol/L, in a range from 0.5 to 1.5 mol/L, 0.8 to 1.3 mol/L, 0.5 to 1.2 mol/L; for another example, 1 mol/L, 1.15 mol/L, 1.2 mol/L, 1.5 mol/L, 2 mol/L, or 2.5 mol/L.

**Electronic device**

The electronic device of this application may be any device using the electrochemical device according to embodiments of this application.

In some embodiments, the electronic device includes, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, etc.

A lithium-ion battery is used as an example and the preparation of the lithium-ion battery is illustrated in combination with specific embodiments. A person skilled in the art should understand that a preparation method described in this application is only an example, and any other suitable preparation methods are within the scope of this application.

**Examples**

Performance evaluation is performed based on examples and a comparative examples of a lithium-ion battery according to this application in the following descriptions.

**I. Preparing a lithium-ion battery**

(1) Preparation of a positive electrode

Mixing a first positive active material ($LiNi_{0.85}Co_{0.05}Mn_{0.1}O_2$, $LiNi_{0.5}Co_{0.2}Mn_{0.3}O_2$:$LiMn_2O_4$ = 3:7, $LiMn_{0.75}Fe_{0.25}PO_4$, and $LiMn_2O_4$ as examples in this application), a conductive agent Super P, and a binder polyvinylidene difluoride (PVDF) in a solvent N-methyl-pyrrolidone (NMP) at a weight ratio of approximately 96:2:2, and stirring evenly to obtain a slurry. Coating aluminum foil as a positive current collector with the slurry to form a first positive active material layer. Mixing a second positive active material ($LiFePO_4$, $LiNi_{0.5}Co_{0.2}Mn_{0.3}O_2$, $LiVO_3$, and $LiNi_{0.5}Mn_{1.5}O_4$ as examples in this application), conductive carbon black, and a binder (PVDF) at a weight ratio of 96:2:2, stirring evenly in NMP, and coating the first positive active material layer with the mixture to form a second positive active material layer. Performing drying, cold pressing, slitting, and cutting, to obtain a positive electrode plate.

(2) Preparation of a negative electrode

Fully stirring and mixing artificial graphite, a conductive agent Super P, a thickener sodium carboxymethyl cellulose (CMC), and a binder styrene-butadiene rubber (SBR) in an appropriate deionized water solvent at a weight ratio of 95:2:2:1 to form an even negative electrode slurry. Coating copper foil as a negative current collector with the slurry, performing drying and cold pressing to obtain a negative electrode active material layer, and then performing cutting, slitting, and tab welding to obtain a negative electrode.

(3) Preparation of electrolyte

In an argon atmosphere glove box, preparing electrolytes in examples and comparative examples according to substances and contents shown in the following tables, where a content of each substance in the electrolyte described below is obtained through calculation based on total mass of the electrolyte, and specific types of solvents and additives used in the electrolyte are shown in Table 1.

**Table 1**

| Substance name | Abbreviati on | Substance name | Abbrev iation |
|---|---|---|---|
| Lithium hexafluorophosphate | $LiPF_6$ | Fluoroethylene carbonate | FEC |
| Ethylene carbonate | EC | 2,4,8,10-tetraoxa-3,9-d ithiaspiro[5.5]undecane ,3,3,9,9-tetraoxide | PBS |
| Ethyl methyl carbonate | EMC | 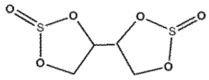 | BES |
| Dimethyl carbonate | DMC | Trimethyl phosphate | TMP |
| Ethyl acetate | EA | Triphenyl phosphate | TPP |

(4) Preparation of a separator

Polyethylene (PE) porous films with different coating thicknesses were used as separators in the following examples and comparative examples. Thicknesses of separators in Table 2 to Table 5 and Table 7 are all 12 μm.

(5) Preparation of a lithium-ion battery

Stacking the positive electrode, the separator, and the negative electrode in order, so that the separator is located between the positive electrode and the negative electrode for isolation. Performing winding to obtain a bare cell. Placing the bare cell in an outer packaging aluminum foil-laminated film. Injecting the electrolyte prepared above into the dried bare cell. After vacuum packaging, standing, formation, shaping, capacity testing, and other processes, completing preparation of a lithium-ion battery.

II. Test method

After preparation of lithium-ion batteries in the examples and comparative examples was completed, recording capacities, thicknesses, widths, and lengths of the finished products (batteries) to determine a volumetric energy density of the lithium-ion batteries. Then, performing high-temperature cycle performance tests and high-temperature storage tests on the lithium-ion batteries in the following examples and comparative examples.

**1. Lithium-ion battery cycle performance test**

Normal temperature cycle performance test

Placing the finished products (lithium-ion batteries) in the examples and comparative examples in a 25°C constant temperature box and standing for 30 minutes to allow the lithium-ion batteries to reach a constant temperature. Charging the lithium-ion battery that has reached the constant temperature with a constant current of 0.5 C until a voltage reaches 4.2 V, then charging the battery with a constant voltage of 4.2 V until a current is less than or equal to 0.05 C, and then discharging the battery with a constant current of 1 C until the voltage reaches 2.8 V. This is a charge and discharge cycle, and a battery cell thickness is tested. Using a capacity of initial discharge as 100%, repeating the charge and discharge cycle until a discharge capacity decreases to 50%, then stopping the test, and recording a quantity of cycles and testing the battery cell thickness as an indicator for evaluating lithium-ion battery cycle performance.

High temperature cycle performance test

Placing the finished products (lithium-ion batteries) in the examples and comparative examples in a 45°C constant temperature box and standing for 30 minutes to allow the lithium-ion batteries to reach a constant temperature. Charging the lithium-ion battery that has reached the constant temperature with a constant current of 0.5 C until a voltage reaches 4.2 V, then charging the battery with a constant voltage of 4.2 V until a current is less than or equal to 0.05 C, and then discharging the battery with a constant current of 1 C until the voltage reaches 2.8 V. This is a charge and discharge cycle, and a battery cell thickness is tested. Using a capacity of initial discharge as 100%, repeating the charge and discharge cycle until a discharge capacity decreases to 50%., then stopping the test, and recording a quantity of cycles and

testing the battery cell thickness as an indicator for evaluating lithium-ion battery cycle performance.

Fully discharged for storage

Placing the finished products (lithium-ion batteries) in the examples and comparative examples in a 25°C constant temperature box for 5 minutes. Charging the battery with a constant current at a rate of 1 C to 4.2 V, then charging the battery with a constant voltage until a current is less than or equal to 0.05 C, leaving the battery for 5 minutes, and then discharging the battery with a constant current at a rate of 1 C to 2.8 V. Next, storing the lithium-ion battery in a 60°C constant temperature box for 60 days. After 60 days of storage, taking out the lithium-ion battery and observing and recording a thickness change amount of the battery.
Thickness growth rate = (Thickness after high temperature storage - Thickness before high temperature storage) / Thickness before high temperature storage × 100%

Fully charged for storage

Placing the finished products (lithium-ion batteries) in the examples and comparative examples in a 25°C constant temperature box for 5 minutes. Charging the battery with a constant current at a rate of 1 C to 4.2 V, then charging the battery with a constant voltage until a current is less than or equal to 0.05 C, leaving the battery for 5 minutes, then discharging the battery with a constant current at a rate of 1 C to 2.8 V, charging the battery with a constant current at a rate of 1 C to 4.2 V, and then charging the battery with a constant voltage until the current is less than or equal to 0.05 C. Next, storing the lithium-ion secondary battery in a fully charged state in a 60°C bake oven for 60 days. After 60 days of storage, taking out the lithium-ion battery and observing and recording a thickness change amount of the battery.
Thickness growth rate (%) = (Thickness after high temperature storage - Thickness before high temperature storage) / Thickness before high temperature storage × 100%

(3) Lithium-ion secondary battery direct current resistance test (DCR test)

Placing the finished products (lithium-ion batteries) in the examples and comparative examples in a 25°C constant temperature box for 5 minutes. Charging the battery with a constant current at a rate of 1 C to 4.2 V, then charging the battery with a constant voltage until a current is less than or equal to 0.05 C, and standing for 30 minutes. Then discharging the battery with a current of 0.1 C for 10 seconds (taking a point every 0.1 second, and recording a corresponding voltage value U1), and discharging the battery with a current of 1 C for 360 seconds (taking a point every 0.1 second, and recording a corresponding voltage value U2). Repeating the charging and discharging steps five times. "1 C" is a current value at which a battery capacity completely discharges within 1 hour.
Calculating a direct current resistance (DCR) according to the following formula: R = (U1 - U2) / (1C - 0.1C). The obtained DCR is concentration polarization impedance in this application, which is a value in a 50% SOC (state of charge) state, namely, a 50% SOC DCR in the examples, with a unit being milliohms.

2. Lithium-ion secondary battery overcharge test

Placing the finished products (lithium-ion batteries) in the examples and comparative examples at a room temperature for 5 minutes, discharging the battery to 2.8 V with a constant current at a rate of 1 C, charging the battery with a constant current at the rate of 1 C to 4.2 V, charging the battery at a constant voltage until a current is less than or equal to 0.05 C, and then leaving the battery for 30 minutes. Next, transferring the lithium-ion battery to an overcharging area for testing, charging the battery to 5 V with a constant current at the rate of 1 C, and charging the battery at the constant voltage of 5 V for 3 hours. A passed test has the following standards: a battery cell does not burn or explode. Testing ten batteries in each group and recording a quantity of batteries that pass the test.

III. Test results

(1) Preparing the electrolytes used in Examples 2.1 to 2.11 and Comparative Examples 2.1 to 2.3 according to the following method (a content of each substance in the electrolyte is obtained through calculation based on total mass of the electrolyte): Mixing ethylene carbonate (EC) with a mass percentage of 26%, lithium hexafluorophosphate ($LiPF_6$) with a mass percentage of 11%, and diethyl carbonate (DEC) with a mass percentage of 63% evenly, where the mass percentage of ethylene carbonate + the mass percentage of lithium hexafluorophosphate + the mass percentage of diethyl carbonate = 100%.
Performance of the lithium-ion batteries prepared was tested according to the above test method, and test results are shown in Table 2.

**Table 2**

| | First positive active material | Second positive active material | Thickness h1 of a first positive active material layer μm | Thickness h2 of a second positive active material layer μm | Capacity retention rate after 800 cycles at 25 °C with 0.5C/1C/% | Thickness expansion rate after 60 days of storage in 100% SOC at 60 °C/% |
|---|---|---|---|---|---|---|
| Example 2.1 | $LiNi_{0.85}Co_{0.05}Mn_{0.1}O_2$ | $LiFePO_4$ | 105 | 10 | 81.8 | 19 |
| Example 2.2 | $LiNi_{0.5}Co_{0.2}Mn_{0.3}O_2$:$LiMn_2O_4$=3:7 | $LiFePO_4$ | 105 | 10 | 80.9 | 18 |
| Example 2.3 | $LiMn_{0.75}Fe_{0.25}PO_4$ | $LiFePO_4$ | 105 | 10 | 81.1 | 20 |
| Example 2.4 | $LiMn_2O_4$ | $LiFePO_4$ | 105 | 10 | 80.5 | 16 |
| Example 2.5 | $LiMn_2O_4$ | $LiNi_{0.5}Co_{0.2}Mn_{0.3}O_2$ | 105 | 10 | 81.3 | 17 |
| Example 2.6 | $LiNi_{0.85}Co_{0.05}Mn_{0.1}O_2$ | $LiVO_3$ | 105 | 10 | 81.6 | 20 |
| Example 2.7 | $LiNi_{0.85}Co_{0.05}Mn_{0.1}O_2$ | $LiNi_{0.5}Mn_{1.5}O_4$ | 105 | 10 | 82.3 | 20 |
| Example 2.8 | $LiNi_{0.85}Co_{0.05}Mn_{0.1}O_2$ | $LiNi_{0.5}Mn_{1.5}O_4$ | 120 | 6 | 81.2 | 20 |
| Example 2.9 | $LiNi_{0.85}Co_{0.05}Mn_{0.1}O_2$ | $LiNi_{0.5}Mn_{1.5}O_4$ | 88 | 11 | 82.8 | 19 |
| Example 2.10 | $LiNi_{0.85}Co_{0.05}Mn_{0.1}O_2$ | $LiNi_{0.5}Mn_{1.5}O_4$ | 56 | 50 | 78.8 | 18 |
| Example 2.11 | $LiNi_{0.85}Co_{0.05}Mn_{0.1}O_2$ | $LiNi_{0.5}Mn_{1.5}O_4$ | 96 | 32 | 80.1 | 20 |
| Comparative Example 2.1 | $LiMn_2O_4$ | / | 105 | / | 72.5 | 26 |
| Comparative Example 2.2 | $LiNi_{0.85}Co_{0.05}Mn_{0.1}O_2$ | / | 105 | / | 77.9 | 23 |
| Comparative Example 2.3 | $LiNi_{0.85}Co_{0.05}Mn_{0.1}O_2$ | $LiNi_{0.5}Mn_{1.5}O_4$ | 56 | 88 | 72.1 | 22 |
| "/" means that the substance does not exist. | | | | | | |

The above test results show that when a positive electrode has two layers of active materials coated in sequence and h1 > h2 is satisfied, a lithium-ion battery exhibits better room temperature cycle performance and high temperature storage performance. Furthermore, when h1/h2 < 8, the second active material layer is too thick, resulting in uneven compaction of the first active material layer, and affecting electrochemical performance of the lithium-ion battery.

Preparing the electrolytes in Examples 3.2 to 3.9 according to the following method (a content of each substance in the electrolyte is obtained through calculation based on total mass of the electrolyte): Mixing ethylene carbonate (EC) with a mass percentage of 26%, lithium hexafluorophosphate ($LiPF_6$) with different mass percentages shown in Table 3, and diethyl carbonate (DEC) evenly, where the mass percentage of ethylene carbonate + a mass percentage of lithium hexafluorophosphate + a mass percentage of diethyl carbonate = 100%.

In Examples 3.2 to 3.9, a first positive active material is $LiMn_2O_4$, and a second positive active material is $LiNi_{0.5}CO_{0.2}Mn_{0.3}O_2$.

The lithium-ion batteries prepared were tested according to the above test method, and test results are shown in Table 3.

Table 3

| | Thicknes s h1 of a first positive active material layer μm | Thicknes s h2 of a second positive active material layer μm | Ratio k of h1 to h2 | Content of LiPF6 a% | k/a | Capacity retention rate after 800 cycles at 25 °C with 0.5C/1C/% | Thickness expansion rate after 60 days of storage in 100% SOC at 60 °C/% |
|---|---|---|---|---|---|---|---|
| Example 2.5 | 105 | 10 | 10.5 | 11 | 0.95 | 81.3 | 17 |
| Example 3.2 | 105 | 10 | 10.5 | 4 | 2.63 | 77.4 | 15 |
| Example 3.3 | 105 | 10 | 10.5 | 5 | 2.1 | 79.8 | 16 |
| Example 3.4 | 105 | 10 | 10.5 | 7.5 | 1.4 | 81.6 | 16 |
| Example 3.5 | 105 | 10 | 10.5 | 10 | 1.05 | 81.8 | 17 |
| Example 3.6 | 105 | 10 | 10.5 | 12.5 | 0.84 | 78.4 | 19 |
| Example 3.7 | 105 | 10 | 10.5 | 18.75 | 0.56 | 76.5 | 20 |
| Example 3.9 | 120 | 6 | 20 | 7.5 | 2.67 | 80.8 | 17 |

It can be seen from the above test results that cycle and high-temperature storage performance of the lithium-ion battery can be effectively improved by adjusting the content of $LiPF_6$ in the electrolyte. It is a surprise for the applicant to find through experiments that, when it is determined that the ratio of ratio k of h1 to h2 to a lithium salt concentration is kept within certain ranges, the lithium-ion secondary battery can have excellent performance. This may be because $LiPF_6$ has poor thermal stability in the electrolyte, and is prone to decompose at a high temperature, which causes acidity of the electrolyte to rise. Reducing the lithium salt concentration can reduce rise in the acidity of the electrolyte, thereby alleviating damage caused by transition metal dissolution. However, when the lithium salt concentration is low, concentration polarization is large, which affects transmission of lithium ions. Therefore, when k/a is too large, interface protection of the second active material layer is insufficient or the acidity generated by the electrolyte is high, and the high-temperature storage performance is affected; and when k/a is too small, compaction of the first active material layer is uneven or the lithium salt concentration is too low, which affects a cycle at 25 °C. In particular, when $5 \leq a \leq 12.5$ and $0.9 \leq k/a \leq 10$ are satisfied, the cycle performance and the storage performance of the lithium-ion battery are both significantly improved.

(4) Preparing the electrolytes in Examples 4.1 to 4.14 according to the following method (a content of each substance in the electrolyte is obtained through calculation based on total mass of the electrolyte): Mixing ethylene carbonate (EC) with a mass percentage of 26%, lithium hexafluorophosphate ($LiPF_6$) with a mass percentage of 7.5%, low viscosity chain ester with different mass percentages, and diethyl carbonate (DEC) evenly, where the mass percentage of ethylene carbonate + the mass percentage of lithium hexafluorophosphate + a mass percentage of the low viscosity chain ester + a mass percentage of diethyl carbonate = 100%.

In Examples 4.1 to 4.14, a first positive active material is $LiMn_2O_4$, and a second positive active material is $LiNi_{0.5}Co_{0.2}Mn_{0.3}O_2$.

Table 4

| | Thickne ss h1 of a first positive active material layer μm | Thickne ss h2 of a second positive active material layer μm | Ratio k of h1 to h2 | Type and content b% of low viscosity chain ester | | | Kb | 25°C *50%* SOC DCR/mΩ |
|---|---|---|---|---|---|---|---|---|
| | | | | EMC | DMC | EA | | |
| Example 4.1 | 150 | 100 | 1.5 | 5 | / | / | 7.5 | 37 |
| Example 4.2 | 88 | 11 | 8 | 5 | / | / | 40 | 34 |
| Example 4.3 | 88 | 11 | 8 | 17.39 | / | / | 139.12 | 30 |
| Example 4.4 | 88 | 11 | 8 | 20 | / | / | 160 | 29 |
| Example 4.5 | 88 | 11 | 8 | 23.81 | / | / | 190.48 | 29 |
| Example 4.6 | 88 | 11 | 8 | 33.33 | / | / | 266.64 | 27 |

(continued)

| | Thickne ss h1 of a first positive active material layer μm | Thickne ss h2 of a second positive active material layer μm | Ratio k of h1 to h2 | Type and content b% of low viscosity chain ester | | | Kb | 25°C *50%* SOC DCR/mΩ |
|---|---|---|---|---|---|---|---|---|
| | | | | EMC | DMC | EA | | |
| Example 4.7 | 88 | 11 | 8 | 61.9 | / | / | 495.2 | 24 |
| Example 4.8 | 88 | 11 | 8 | 63 | / | / | 504 | 23 |
| Example 4.9 | 88 | 11 | 8 | / | 23.81 | / | 190.48 | 27 |
| Example 4.10 | 88 | 11 | 8 | / | 33.33 | / | 266.64 | 24 |
| Example 4.11 | 88 | 11 | 8 | / | / | 23.81 | 190.48 | 27 |
| Example 4.12 | 88 | 11 | 8 | / | / | 33.33 | 266.64 | 23 |
| Example 4.13 | 88 | 11 | 8 | 23.81 | 33.33 | / | 457.12 | 22 |
| Example 4.14 | 88 | 11 | 8 | 19.05 | 19.05 | 19.05 | 457.2 | 21 |
| "/" means that the substance does not exist. | | | | | | | | |

It can be seen from the above test results that when a value of k is within an appropriate range, adjusting a content of a low-viscosity chain ester solvent in an electrolyte can effectively improve a DCR of the lithium-ion battery, which is mainly because the low-viscosity chain ester solvent generally has low viscosity and good fluidity, and can increase a migration rate of lithium ions. When a value of k is too small, uneven compaction density causes uneven current density distribution, which affects dynamics and a service life of the lithium-ion battery. When the mass percentage of the low viscosity chain ester in the electrolyte is b% and $kb \geq 40$ and $20 \leq b \leq 63$ are satisfied, the DCR of the lithium-ion battery is significantly reduced.

(5) Preparing the electrolytes in Examples 5.1 to 5.8 and Comparative Example 5.1 according to the following method (a content of each substance in the electrolyte is obtained through calculation based on total mass of the electrolyte): Mixing ethylene carbonate (EC) with a mass percentage of 26%, lithium hexafluorophosphate ($LiPF_6$) with different mass percentages shown in Table 5, and diethyl carbonate (DEC) evenly, where the mass percentage of ethylene carbonate + a mass percentage of lithium hexafluorophosphate + a mass percentage of diethyl carbonate = 100%.

Positive electrodes in Examples 5.1 to 5.8 and Comparative Example 5.1 are the same as the positive electrode in Example 3.4.

Performance of the lithium-ion batteries prepared was tested according to the above test method, and test results are shown in Table 5.

**Table 5**

| | Content of $LiPF_6$ a% | BET d of a positive active material | a×d | Capacity retention rate after 400 cycles at 45 °C with 0.5C/1C/% |
|---|---|---|---|---|
| Example 3.4 | 7.5 | 0.34 | 2.55 | 72.4 |
| Example 5.1 | 5 | 0.2 | 1 | 70.9 |
| Example 5.2 | 7.5 | 0.2 | 1.5 | 71.3 |
| Example 5.3 | 7.5 | 0.47 | 3.53 | 73.3 |
| Example 5.4 | 7.5 | 0.52 | 3.9 | 73.6 |
| Example 5.5 | 7.5 | 0.66 | 4.95 | 73.7 |
| Example 5.6 | 7.5 | 0.73 | 5.48 | 73.7 |
| Example 5.7 | 7.5 | 0.8 | 6 | 73.8 |
| Example 5.8 | 12.5 | 0.8 | 10 | 74 |

(continued)

| | Content of $LiPF_6$ a% | BET d of a positive active material | a×d | Capacity retention rate after 400 cycles at 45 °C with 0.5C/1C/% |
|---|---|---|---|---|
| Comparative Example 5.1 | 7.5 | 0.1 | 0.75 | 65.7 |

The above test results show that when a content of a lithium salt in an electrolyte is low, further adjusting the specific surface area BET of the positive active material can further improve cycle performance of a battery. When $0.2 \leq d \leq 1$ and $1 \leq a \times d \leq 10$ are satisfied, the cycle performance of the lithium-ion battery is significantly improved.

(6) Preparation method of the electrolytes in Examples 6.1 to 6.15: Mixing ethylene carbonate (EC) with a mass percentage of 26%, lithium hexafluorophosphate ($LiPF_6$) with a mass percentage of 7.5%, low viscosity chain ester EMC with different mass percentages, and diethyl carbonate (DEC) evenly, where the mass percentage of ethylene carbonate + the mass percentage of lithium hexafluorophosphate + a mass percentage of the low viscosity chain ester + a mass percentage of diethyl carbonate = 100%.

Positive electrodes in Examples 6.1 to 6.15 are the same as the positive electrode in Example 4.6.

The lithium-ion batteries prepared were tested according to the above test method, and test results are shown in Table 6.

**Table 6**

| | Content b% of low viscosity chain ester | Thicknes s of a separator (μm) | Liquid retention coefficient z ($cm^3$/Ah) | b/e | Capacity retention rate after 400 cycles at 45 °C with 0.5C/1C/% | 25°C 50% SOC DCR/mΩ |
|---|---|---|---|---|---|---|
| Example 4.6 | 33.33 | 12 | 4 | 2.78 | 73.1 | 27 |
| Example 6.1 | 63 | 7 | 4 | 9 | 72.2 | 23 |
| Example 6.2 | 33.33 | 5 | 4 | 6.67 | 72.3 | 26 |
| Example 6.3 | 33.33 | 7 | 4 | 4.76 | 72.7 | 27 |
| Example 6.4 | 33.33 | 13 | 4 | 2.56 | 73.6 | 27 |
| Example 6.5 | 33.33 | 16 | 4 | 2.08 | 73.8 | 27 |
| Example 6.6 | 33.33 | 18 | 4 | 1.85 | 73.5 | 28 |
| Example 6.7 | 20 | 20 | 4 | 1 | 73.1 | 30 |
| Example 6.8 | 33.33 | 16 | 2 | 2.08 | 70.2 | 32 |
| Example 6.9 | 33.33 | 16 | 3 | 2.08 | 73.5 | 27 |
| Example 6.10 | 33.33 | 16 | 3.4 | 2.08 | 74.1 | 24 |
| Example 6.11 | 33.33 | 16 | 4.6 | 2.08 | 73.6 | 28 |
| Example 6.12 | 33.33 | 16 | 5 | 2.08 | 73.5 | 32 |
| Example 6.13 | 63 | 5 | 4 | 12.6 | 70.2 | 22 |
| Example 6.14 | 33.33 | 22 | 4 | 1.52 | 69.5 | 31 |
| Example 6.15 | 33.33 | 16 | 1.5 | 2.08 | 65.3 | 35 |

The above test results show that a thickness of a coating of a separator also affects battery performance. When a content of a lithium salt is low and a coating weight of a positive electrode film layer is large, an electrode plate is poorly infiltrated, and dynamics is worse. Increasing the thickness of the coating of the separator can improve a liquid retention capacity and an electrolyte supply capacity of a battery. However, if the separator is too thick, transmission of lithium ions is slowed down and cycle performance is affected. In addition, when the content of the lithium salt is low and the coating weight of the positive electrode film layer is large, if a liquid retention amount of an electrolyte is too small, some active materials are not infiltrated, and a capacity of the battery cannot be fully used. However, too much liquid injection amount also causes problems such as a decrease in an energy density of the lithium-ion battery and an increase in cost. Therefore, reasonable control of a volume liquid retention coefficient is required to enable the battery to exert optimal performance.

When 1 ≤ b/e ≤ 9 and 2 ≤ z ≤ 5 are satisfied, the cycle performance of the lithium-ion battery is significantly improved and a DCR is significantly reduced.

(7) Preparing the electrolytes in Examples 7.1 to 7.25 according to the following method (a content of each substance in the electrolyte is obtained through calculation based on total mass of the electrolyte): Mixing ethylene carbonate (EC) with a mass percentage of 26%, lithium hexafluorophosphate ($LiPF_6$) with a mass percentage of 11%, a fluorocarbonate compound with different mass percentages shown in Table 7, a bicyclic compound containing a sulfur-oxygen double bond with different mass percentages, a phosphate compound with different mass percentages, and diethyl carbonate (DEC) evenly, where the mass percentage of ethylene carbonate + the mass percentage of lithium hexafluorophosphate + a mass percentage of the fluorocarbonate compound + a mass percentage of the bicyclic compound containing the sulfur-oxygen double bond + a mass percentage of the phosphate compound + a mass percentage of diethyl carbonate = 100%.

Positive electrodes in Examples 7.1 to 7.25 are the same as the positive electrode in Example 2.5.

The lithium-ion batteries prepared were tested according to the above test method, and test results are shown in Table 7.

**Table 7**

| | Content f% of a fluorocarbonate compound | Type and content g% of a bicyclic compound containing a sulfur-oxygen double bond | | Type and content i% of a phosphate compound | | Thickness expansion rate after 60 days of storage in 100% SOC at 60 °C/% | Capacity retention rate after 800 cycles at 25 °C with 0.5C/1C% % | Overcharge test |
|---|---|---|---|---|---|---|---|---|
| | FEC | PBS | BES | TMP | TPP | | | |
| Example 2.5 | / | / | / | / | / | 17 | 81.3 | 5/10 Pass |
| Example 7.1 | 0.0095 | / | / | / | / | 17 | 81.8 | 5/10 Pass |
| Example 7.2 | 0.28 | / | / | / | / | 18 | 83.9 | 6/10 Pass |
| Example 7.3 | 0.47 | / | / | / | / | 19 | 83.9 | 6/10 Pass |
| Example 7.4 | 2.78 | / | / | / | / | 21 | 84 | 6/10 Pass |
| Example 7.5 | 8.7 | / | / | / | / | 26 | 83.8 | 6/10 Pass |
| Example 7.6 | 0.28 | 0.095 | / | / | / | 17 | 84 | 6/10 Pass |
| Example 7.7 | 0.28 | 1.86 | / | / | / | 9 | 84.7 | 7/10 Pass |
| Example 7.8 | 0.28 | 2.77 | / | / | / | 9 | 84.6 | 7/10 Pass |
| Example 7.9 | 0.27 | 4.53 | / | / | / | 9 | 84.3 | 7/10 Pass |
| Example 7.10 | 0.28 | / | 0.095 | / | / | 17 | 84.2 | 7/10 Pass |
| Example 7.11 | 0.28 | / | 0.28 | / | / | 15 | 84.4 | 7/10 Pass |
| Example 7.12 | 0.28 | / | 0.47 | / | / | 14 | 84.2 | 7/10 Pass |
| Example 7.13 | 0.28 | / | 1.86 | / | / | 11 | 83.7 | 7/10 Pass |

(continued)

| | Content f% of a fluorocarbonate compound | Type and content g% of a bicyclic compound containing a sulfur-oxygen double bond | | Type and content i% of a phosphate compound | | Thickness expansion rate after 60 days of storage in 100% SOC at 60 °C/% | Capacity retention rate after 800 cycles at 25 °C with 0.5C/1C% % | Overcharge test |
|---|---|---|---|---|---|---|---|---|
| | FEC | PBS | BES | TMP | TPP | | | |
| Example 7.14 | 0.28 | 1.86 | 0.093 | / | / | 8 | 85.1 | 7/10 Pass |
| Example 7.15 | 0.28 | 1.86 | 0.28 | / | / | 7 | 85.5 | 7/10 Pass |
| Example 7.16 | 0.28 | 1.86 | 0.28 | 0.093 | / | 7 | 85.5 | 7/10 Pass |
| Example 7.17 | 0.28 | 1.85 | 0.28 | 0.46 | / | 7 | 85.6 | 9/10 Pass |
| Example 7.18 | 0.28 | 1.84 | 0.28 | 0.92 | / | 7 | 85.6 | 10/10 Pass |
| Example 7.19 | 0.27 | 1.82 | 0.27 | 1.82 | / | 7 | 85.4 | 10/10 Pass |
| Example 7.20 | 0.27 | 1.81 | 0.27 | 2.71 | / | 8 | 85.2 | 10/10 Pass |
| Example 7.21 | 0.28 | 1.86 | 0.28 | / | 0.09 3 | 7 | 85.5 | 7/10 Pass |
| Example 7.22 | 0.28 | 1.85 | 0.28 | / | 0.46 | 7 | 85.3 | 8/10 Pass |
| Example 7.23 | 0.28 | 1.84 | 0.28 | / | 0.92 | 7 | 84.8 | 9/10 Pass |
| Example 7.24 | 0.27 | 1.82 | 0.27 | / | 1.82 | 8 | 84.2 | 10/10 Pass |
| Example 7.25 | 0.27 | 1.81 | 0.27 | / | 2.71 | 8 | 83.9 | 10/10 Pass |
| "/" means that the substance does not exist. | | | | | | | | |

Compared with Example 2.5, in Examples 7.1 to 7.5 in Table 7, adding an FEC additive to an electrolyte can further improve cycle performance of a battery. This is mainly because the FEC additive can further modify an SEI of a negative electrode, a formed SEI film has a denser structure without increased impedance, and the SEI film with better performance can prevent further decomposition of the electrolyte. When $f \leq 10$ is satisfied, the electrolyte has a better improvement effect.

Compared with Example 7.2, in Examples 7.6 to 7.15 in Table 7, adding a bicyclic compound containing a sulfur-oxygen double bond to an electrolyte can significantly improve high-temperature storage performance of a battery. This is mainly because the bicyclic compound containing the sulfur-oxygen double bond can form an SEI film on an electrode surface. The formed SEI film has a denser structure without increased impedance. The film can not only effectively inhibit transition metal dissolution, but also provide good protection for an electrode interface. When a content of the bicyclic compound containing the sulfur-oxygen double bond satisfies $g \leq 5$, cycle performance and an overcharge performance test of the lithium-ion battery are significantly improved.

**It** can be seen from Examples 7.16 to 7.25 and Example 7.15 that by adding a phosphate compound to an electrolyte, overcharge performance of a lithium-ion battery is better. The phosphate compound is used as an additive. This is mainly because the phosphate compound can have a polymerization reaction, and a generated polymer film can block battery overcharge, prevent thermal runaway, and keep the battery in a safe state.

References throughout this specification to "some embodiments", "partial embodiments", "one embodiment", "another example", "example", "specific example", or "partial example" mean that at least one embodiment or example in this application includes a specific feature, structure, material, or characteristic described in the embodiment or example. Accordingly, phrases throughout this specification such as "in some embodiments", "in an embodiment", "in one embodiment", "in another example", "in one example", "in a particular example", or "example" do not necessarily refer to the same embodiment or example in this application. Furthermore, the specific features, structures, materials, or characteristics herein may be combined in any appropriate manner in one or more embodiments or examples.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. An electrochemical device, comprising a positive electrode, a negative electrode, an electrolyte, and a separator, wherein

   the positive electrode comprises a positive current collector and a first positive active material layer and a second positive active material layer located on the positive current collector, the first positive active material layer is located between the positive current collector and the second positive active material layer;
   the first positive active material layer comprises an element Mn and has a thickness of h1 μm;
   the second positive active material layer has a thickness of h2 μm, and h1 > h2.

2. The electrochemical device according to claim 1, wherein the electrolyte comprises a fluorine-containing lithium salt, a content of the fluorine-containing lithium salt is a% based on total mass of the electrolyte, and a ratio h1/h2 of the thickness h1 of the first positive active material layer to the thickness h2 of the second positive active material layer is k, wherein

$$5 \leq a \leq 12.5;$$

   and

$$0.9 \leq k/a \leq 10.$$

3. The electrochemical device according to claim 2, wherein $6 \leq a \leq 10$ and/or $1 \leq k/a \leq 4$ is satisfied.

4. The electrochemical device according to claim 1, wherein the electrolyte comprises low viscosity chain ester, and the low viscosity chain ester is selected from at least one of dimethyl carbonate, ethyl methyl carbonate, ethyl acetate, ethyl propionate, propyl propionate, methyl formate, ethyl formate, or methyl butyrate; and
   a content of the low viscosity chain ester is b% based on total mass of the electrolyte, and a ratio h1/h2 of the thickness h1 of the first positive active material layer to the thickness h2 of the second positive active material layer is k, where

$$20 \leq b \leq 63;$$

   and

$$kb \geq 40, \text{ and preferably } 8 \leq k \leq 20.$$

5. The electrochemical device according to claim 1, wherein

   the first positive active material layer comprises a first positive active material, and the first positive active material comprises at least one of lithium manganate, lithium nickel manganate, lithium nickel-cobalt manganate oxide, lithium manganese iron phosphate, lithium manganese phosphate, or lithium-rich manganese based materials; and
   the second positive active material layer includes a second positive active material, and the second positive active

material includes at least one of lithium cobalt oxide, lithium iron phosphate, lithium manganese iron phosphate, lithium manganese phosphate, sodium iron phosphate, lithium vanadium phosphate, sodium vanadium phosphate, lithium vanadyl phosphate, sodium vanadyl phosphate, lithium vanadate, lithium manganate, lithium nickelate, lithium nickel cobalt manganese oxide, lithium-rich manganese based materials, lithium nickel-cobalt aluminate, or lithium titanate.

**6.** The electrochemical device according to claim 1, wherein the first positive active material layer comprises a first positive active material, and the first positive active material comprises lithium manganate; and the second positive active material layer comprises a second positive active material, and the second positive active material comprises at least one of lithium iron phosphate, lithium nickel manganese cobalt oxide, or lithium vanadate.

**7.** The electrochemical device according to claim 1, wherein h1 is 30 to 120, h2 is 0.1 to 50, h1/h2 is k, and $8 \leq k \leq 20$.

**8.** The electrochemical device according to claim 8, wherein $8 \leq k \leq 15$.

**9.** The electrochemical device according to claim 2, wherein the fluorine-containing lithium salt is selected from at least one of lithium hexafluorophosphate, lithium bis(trifluoromethanesulphonyl)imide, lithium bis(fluorosulfonyl)imide, lithium tetrafluoroborate, lithium difluoro(oxalato)borate, or lithium trifluoromethanesulfonate.

**10.** The electrochemical device according to claim 2, wherein the first positive active material layer comprises a first positive active material, and a specific surface area of the first positive active material is d $m^2/g$, wherein

$$0.2 \leq d \leq 1, \text{ and preferably } 0.3 \leq d \leq 1;$$

and

$$1 \leq a \times d \leq 10.$$

**11.** The electrochemical device according to claim 4, wherein the separator comprises a coating, the coating comprises a carbonyl-containing polymer, the carbonyl-containing polymer has a peak at 1800 $cm^{-1}$ to 1700 $cm^{-1}$ in an infrared spectrum, a thickness of the separator is e $\mu m$, and $1 \leq b/e \leq 9$.

**12.** The electrochemical device according to claim 1, wherein the electrolyte further comprises a fluorocarbonate compound, a content of the fluorocarbonate compound is f% based on total mass of the electrolyte, and $f \leq 10$.

**13.** The electrochemical device according to claim 1, wherein the electrolyte comprises a compound containing a sulfur-oxygen double bond, a content of the compound containing the sulfur-oxygen double bond is g% based on total mass of the electrolyte, $g \leq 5$, and the compound containing the sulfur-oxygen double bond comprises a compound of Formula VI:

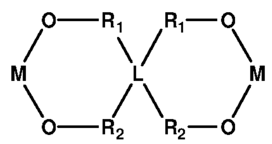

Formula VI;

wherein L is selected from

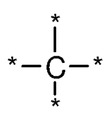
, 
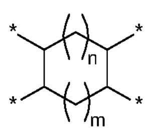
, 
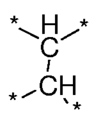
, or 
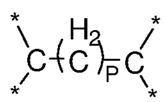
;

$R_1$ and $R_2$ each are independently selected from a single bond or a methylene group; m and n each are independently an integer from 0 to 2; p is an integer from 0 to 6; and each M is independently selected from

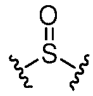 or 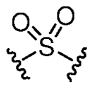.

**14.** The electrochemical device according to claim 13, wherein the compound containing the sulfur-oxygen double bond is selected from at least one of 2,4,8,10-tetraoxa-3,9-dithiaspiro[5.5]undecane,3,3,9,9-tetraoxide or

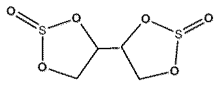.

**15.** The electrochemical device according to claim 1, wherein the electrolyte comprises a phosphate compound, wherein the phosphate compound is selected from at least one of trimethyl phosphate or triphenyl phosphate; and a content of the phosphate compound is i% based on total mass of the electrolyte, wherein $0.09 \leq i \leq 3$.

**16.** The electrochemical device according to claim 1, wherein a liquid retention coefficient of the electrochemical device is z g/Ah, wherein $2 \leq z \leq 5$.

**17.** An electronic device, comprising the electrochemical device according to any one of claims 1 to 16.

**INTERNATIONAL SEARCH REPORT**

International application No. **PCT/CN2022/144390**

**A. CLASSIFICATION OF SUBJECT MATTER**

H01M 10/0567(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNPAT, CNKI, DWPI, EXTXT: 宁德新能源科技有限公司, 郑烨珍, 周邵云, 电池, 正极, 活性材料, 第二, 另一, 层, 厚, battery, lithium, active material, positive, thick+, second, another, layer

**C. DOCUMENTS CONSIDERED TO BE RELEVANT**

| Category* | Citation of document, with indication, where appropriate, of the relevant passages | Relevant to claim No. |
|---|---|---|
| X | CN 112216822 A (NINGDE CONTEMPORARY AMPEREX TECHNOLOGY CO., LTD.) 12 January 2021 (2021-01-12)<br>description, paragraphs [0028]-[0060] and [0077]-[0124] | 1-12, 15-17 |
| Y | CN 112216822 A (NINGDE CONTEMPORARY AMPEREX TECHNOLOGY CO., LTD.) 12 January 2021 (2021-01-12)<br>description, paragraphs [0028]-[0060] and [0077]-[0124] | 13, 14 |
| Y | CN 114039093 A (SHANGHAI ELECTRIC GUOXUAN NEW ENERGY TECHNOLOGY CO., LTD.) 11 February 2022 (2022-02-11)<br>description, paragraphs [0006]-[0011] | 13, 14 |
| A | CN 101174684 A (BYD CO., LTD.) 07 May 2008 (2008-05-07)<br>entire document | 1-17 |
| A | CN 101330138 A (NISSAN MOTOR CO., LTD.) 24 December 2008 (2008-12-24)<br>entire document | 1-17 |
| A | CN 112542571 A (ZHUHAI COSMX BATTERY CO., LTD.) 23 March 2021 (2021-03-23)<br>entire document | 1-17 |

☑ Further documents are listed in the continuation of Box C. ☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **01 September 2023** | **11 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2022/144390

C. DOCUMENTS CONSIDERED TO BE RELEVANT

| Category* | Citation of document, with indication, where appropriate, of the relevant passages | Relevant to claim No. |
|---|---|---|
| A | CN 112670443 A (SVOLT ENERGY TECHNOLOGY CO., LTD.) 16 April 2021 (2021-04-16) entire document | 1-17 |
| A | CN 114122326 A (QINGTAO (KUNSHAN) ENERGY DEVELOPMENT CO., LTD.) 01 March 2022 (2022-03-01) entire document | 1-17 |
| A | CN 115133008 A (HENGDIAN GROUP DMEGC MAGNETICS CO., LTD.) 30 September 2022 (2022-09-30) entire document | 1-17 |
| A | CN 115483365 A (ZHUHAI COSMX BATTERY CO., LTD.) 16 December 2022 (2022-12-16) entire document | 1-17 |
| A | CN 218004914 U (BYD CO., LTD.) 09 December 2022 (2022-12-09) entire document | 1-17 |
| A | JP 2015060803 A (TOYOTA INDUSTRIES CORPORATION) 30 March 2015 (2015-03-30) entire document | 1-17 |

Form PCT/ISA/210 (second sheet) (July 2022)

**INTERNATIONAL SEARCH REPORT**
**Information on patent family members**

International application No.
**PCT/CN2022/144390**

| Patent document cited in search report | | | Publication date (day/month/year) | Patent family member(s) | | | Publication date (day/month/year) |
|---|---|---|---|---|---|---|---|
| CN | 112216822 | A | 12 January 2021 | None | | | |
| CN | 114039093 | A | 11 February 2022 | None | | | |
| CN | 101174684 | A | 07 May 2008 | None | | | |
| CN | 101330138 | A | 24 December 2008 | EP | 2006941 | A1 | 24 December 2008 |
| | | | | EP | 2006941 | B1 | 26 May 2010 |
| | | | | JP | 2009004181 | A | 08 January 2009 |
| | | | | JP | 5167703 | B2 | 21 March 2013 |
| | | | | DE | 602008001332 | D1 | 08 July 2010 |
| | | | | KR | 20080112134 | A | 24 December 2008 |
| | | | | KR | 101014969 | B1 | 16 February 2011 |
| | | | | US | 2008318133 | A1 | 25 December 2008 |
| | | | | US | 8697289 | B2 | 15 April 2014 |
| CN | 112542571 | A | 23 March 2021 | None | | | |
| CN | 112670443 | A | 16 April 2021 | None | | | |
| CN | 114122326 | A | 01 March 2022 | None | | | |
| CN | 115133008 | A | 30 September 2022 | None | | | |
| CN | 115483365 | A | 16 December 2022 | None | | | |
| CN | 218004914 | U | 09 December 2022 | None | | | |
| JP | 2015060803 | A | 30 March 2015 | JP | 6136809 | B2 | 31 May 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9812739 B